# EUROPÄISCHE PATENTSCHRIFT

(11) **EP 0 659 053 B1**
(45) Veröffentlichungstag und Bekanntmachung des Hinweises auf die Patenterteilung: **03.12.1997**
(21) Anmeldenummer: 93919247.2
(22) Anmeldetag: 03.09.1993
(51) Int. Cl.: A47L 11/40

(54) **AUFBEWAHRUNGS- UND WARTUNGSEINRICHTUNG**
STORAGE AND MAINTENANCE SYSTEM
SYSTEME D'ENTREPOSAGE ET D'ENTRETIEN

(30) Priorität: 09.09.1992 DE 4230197
(43) Veröffentlichungstag der Anmeldung: 28.06.1995
(73) Patentinhaber: ZACHHUBER, Kurt, D-83026 Rosenheim (DE)
(72) Erfinder: ZACHHUBER, Kurt, D-83026 Rosenheim (DE)
(74) Vertreter: Grättinger & Partner (GbR)
(86) Internationale Anmeldenummer: EP9302372
(87) Internationale Veröffentlichungsnummer: WO9405197

(56) Entgegenhaltungen:
- EP-A- 0 352 459
- US-A- 3 698 029
- US-A- 3 736 948
- US-A- 4 036 346
- US-A- 4 989 291
- PATENT ABSTRACTS OF JAPAN vol. 007, no. 159 (M-228)13. Juli 1958 & JP,A,58 067 548 (TOUKIYOU TATSUNO KK) 22. April 1983
- PATENT ABSTRACTS OF JAPAN vol. 008, no. 090 (M-292)25. April 1984 & JP,A,59 006 144 (TOUKIYOU TATSUNO KK) 13. Januar 1984
- PATENT ABSTRACTS OF JAPAN vol. 012, no. 120 (M-685)14. April 1988 & JP,A,62 247 952 (KOICHI NISHIKAWA) 29. Oktober 1987

## Beschreibung

Die vorliegende Erfindung betrifft eine Aufbewahrungs- und Wartungseinrichtung für eine mobile Reinigungsmaschine oder dergleichen.

An mobilen Reinigungsmaschinen und dergleichen sind regelmäßig, zum Teil nach jedem Arbeitseinsatz wiederkehrende Wartungs- und Pflegearbeiten auszuführen; so sind regelmäßig nach einem Arbeitseinsatz der maschineneigene Energiespeicher (Akkumulatoren, Treibstofftank oder dergleichen) sowie Behälter für Verbrauchsstoffe (Frischwasser, Reinigungsmittel etc.) aufzufüllen. Desweiteren sind in unregelmäßigen Abständen Verschleißteile auszuwechseln, und ggfs. erforderliche Reparaturen vorzunehmen.

Die amerikanische Patentschrift US-3698029 beschreibt eine automatische Waschvorrichtung zum Waschen von Einkaufswagen. Dabei werden Einkaufswagen unterschiedlicher Größe in zusammengeschobener Form auf einem Förderband nacheinander durch eine Waschkammer und eine Spülkammer der Vorrichtung gefördert. Während des Waschvorgangs werden mehrere Bürsten innerhalb des abschlossenen Waschautomaten an die Einkaufswagen angedrückt. Während des Fördervorganges werden die Einkaufswagen in Schienen geführt.

Der vorliegenden Erfindung liegt die Aufgabe zugrunde, für die Durchführung der eingangs erläuterten, in regelmäßiger Abfolge an mobilen Reinigungsmaschinen oder dergleichen durchzuführenden Arbeiten optimale Voraussetzungen zu schaffen. D.h., die notwendigen Arbeiten und Tätigkeiten sollen einfach, schnell, zuverlässig und sicher ausgeführt werden können. Dabei soll die Maschine zudem vor Diebstahl und mutwilliger Beschädigung geschützt sein.

Gemäß der vorliegenden Erfindung wird diese Aufgabe durch eine Aufbewahrungs- und Wartungseinrichtung für eine mobile Reinigungsmaschine gelöst, die einen zumindest teilweise abgeschlossenen Raum für die abzustellende mobile Maschine, Führungselemente zu deren exakter Positionierung in dem Raum, eine erste Versorgungseinheit zum Füllen der maschineneigenen Energiespeicher und eine zweite Versorgungseinheit zum Füllen maschineneigener Behälter mit Verbrauchsstoffen umfaßt. Die Erfindung stellt somit eine kompakte "Servicestation" bereit, in welche die Maschine nach ihrem Arbeitseinsatz eingestellt und in der sie für den nächsten Einsatz vorbereitet wird. Die Sicherheit in dem Gebäude wird dadurch erhöht, daß keine Versorgungsleitungen oder dergleichen herumliegen. Infolge der erfindungsgemäß vorgesehenen Führungselemente nimmt die in die Aufbewahrungs- und Wartungseinrichtung eingestellte Maschine genau den für sie bestimmten Platz ein; sie befindet sich auf diese Weise automatisch in der Stellung, in der ein Befüllen insbesondere der maschineneigenen Behälter mit Verbrauchsstoffen automatisch möglich ist. Die Maschine braucht nach ihrem Arbeitseinsatz somit nur noch von der Bedienperson in die Aufbewahrungs- und Wartungseinrichtung eingestellt zu werden, woraufhin die zur Vorbereitung auf den nächsten Arbeitseinsatz erforderlichen Tätigkeiten (Füllen der maschineneigenen Energiespeicher sowie der maschineneigenen Behälter mit Verbrauchsstoffen) automatisch durchgeführt werden können. Jegliche Fehlbedienung, die zu einer Beschädigung der Maschine führen kann, ist sicher ausgeschlossen.

Bei einer bevorzugten Weiterbildung der erfindungsgemäßen Aufbewahrungs- und Wartungseinrichtung sind an dieser eine Arbeitsfläche sowie ein Werkzeugbehältnis vorgesehen. Während die Maschine in dem entsprechenden Raum der Aufbewahrungs- und Wartungseinrichtung abgestellt und an die Versorgungseinheiten angeschlossen ist, können auf der zugeordneten Arbeitsfläche weitere notwendige Wartungsarbeiten durchgeführt werden. Das hierzu erforderliche Werkzeug ist leicht erreichbar in dem zugeordneten Werkzeugbehältnis untergebracht. Mit der dermaßen weitergebildeten Aufbewahrungs- und Wartungseinrichtung sind die erforderlichen Arbeiten besonders ökonomisch ausführbar.

Als besonders vorteilhaft hat es sich erwiesen, wenn die erfindungsgemäße Aufbewahrungs- und Wartungseinrichtung mit verschließbaren Behältnissen für Ersatz-, Austausch- und Verschleißteile ausgestattet ist. Derartige Behältnisse sind zweckmäßigerweise mit Schlössern versehen, welche durch Münzeinwurf, mittels einer individuellen Benutzerkarte oder mittels eines einzugebenden Codes zu öffnen sind. Insbesondere im Hinblick auf Verschleißteile gestattet eine derartige Ausgestaltung der erfindungsgemäßen Aufbewahrungs- und Wartungseinrichtung einen optimalen Service. Denn dem Anwender der Maschine können auf diese Weise Verschleißteile ständig zum Auswechseln angeboten werden, ohne daß er ein eigenes Lager hierfür anlegen müßte. Denn die Behältnisse werden regelmäßig von dem zuständigen Serviceunternehmen überprüft und gegebenenfalls aufgefüllt. Es ergibt sich somit die Möglichkeit zu einer dezentralen Lagerhaltung für Ersatzteile durch das Serviceunternehmen; und dem Kunden werden die benötigten Verschleißteile erst dann in Rechnung gestellt, wenn er diese den verschließbaren Behältnissen entnimmt. Diese Ausgestaltung der erfindungsgemäßen Aufbewahrungs- und Wartungseinrichtung trägt zu einer bedeutend höheren Verfügbarkeit der Maschine und somit zur Einsparung von Kosten bei. Mögliche Verschleißteile sind beispielsweise Gummilippen, Bürsten, Pads und Filter.

Die erfindungsgemäße Aufbewahrungs- und Wartungseinrichtung kann darüberhinaus mit einer Entsorgungseinheit bestückt sein. Im Falle einer beispielsweise auf eine Scheuersaugmaschine abgestimmten Aufbewahrungs- und Wartungseinrichtung dient eine derartige Entsorgungseinheit dem Entfernen des Schmutzwassers aus der Maschinen sowie ggfs. dessen Aufbereitung. Hierzu umfaßt die entsprechende Entsorgungseinheit einen Auffangtrichter sowie Leitungen für das Schmutzwasser, ggfs. eine Pumpe sowie einen der Schmutzwasseraufbereitung dienenden Filter. Auch kann eine Presse zur Entwässerung des mit dem Filter aufgefangenen Schlammes vorgesehen sein. Ggfs. werden mittels einer gesonderten Reinigungsvorrichtung die maschineneigenen Behälter gereinigt, insbesondere die Schmutzwassertanks gespült, um deren vollständige Entleerung sicherzustellen. Eine derartige zusätzliche Reinigungsvorrichtung umfaßt somit insbesondere eine Spülpumpe sowie Spülleitungen.

Die zweite Versorgungseinheit für die Versorgung der Maschine mit Verbrauchsstoffen umfaßt bevorzugt einen Tank und ein Dosiersystem für Reinigungsmittel sowie einen Frischwasserversorgungsteil. Das Dosiersystem umfaßt zweckmäßigerweise eine Dosierautomatik. An einer gut zugänglichen Stelle - bevorzugt in der Nähe der zentralen elektronischen Steuereinheit - kann dabei ein Bedienpult zur Einstellung der Dosierautomatik vorgesehen sein. Eine derartige Dosierautomatik gewährleistet insbesondere, daß das Reinigungsmittel stets in vorschriftsmäßiger Dosierung angewandt wird. Eine unbeabsichtigte oder beabsichtigte Fehldosierung ist nicht möglich. In Folge des dadurch gewährleisteten optimalen Reinigungsergebnisses bei minimalem Einsatz von Reinigungsmittel wird gleichermaßen ökonomisch und umweltfreundlich gearbeitet. Darüberhinaus verhindert eine derartige Dosierautomatik, daß Reinigungsmittel entwendet werden kann. Denn durch eine derartige Automatik läßt sich sicherstellen, daß das Reinigungsmittel ausschließlich in den entsprechenden maschineneigenen Behälter eingefüllt wird, nicht jedoch in irgendein anderes Behältnis, mit welchem das Reinigungsmittel weggeschafft werden könnte. Auch kann eine automatische Dosiervorrichtung dazu beitragen, daß, auf den jeweiligen Arbeitseinsatz der Reinigungsmaschine abgestimmt, das richtige Reinigungsmittel der Maschine zugeführt wird.

Auch für andere Verbrauchstoffe ebenso wie für die der Maschine zuzuführende Energie können automatische Schaltungen vorgesehen sein, die eine Fehlbedienung ausschließen und die die entsprechenden Versorgungseinheiten einschalten, sobald die Maschine in die Aufbewahrungs- und Wartungseinrichtung eingestellt wird.

Zweckmäßigerweise ist an der Aufbewahrungs- und Wartungseinrichtung zusätzlich ein Warmwasserbereiter vorgesehen. Dieser verfügt zweckmäßigerweise über einen Temperaturregler, mit welchem die gewünschte Temperatur des Warmwassers eingestellt werden kann. Denn für bestimmte Reinigungsmittel muß das Wasser, dem es zugegeben wird, eine bestimmte Temperatur besitzen, um eine optimale Reinigungswirkung zu entfalten.

Eine weitere bevorzugte Weiterbildung der erfindungsgemäßen Aufbewahrungs- und Wartungseinrichtung ist dadurch gekennzeichnet, daß sie sich auf Rädern auf dem Boden abstützt. Hierdurch kann die Aufbewahrungs- und Wartungseinrichtung selbst im Falle ihrer Nichtbenutzung platzsparend verstaut werden. Infolge ihrer Ausrüstung mit Rädern kann die Aufbewahrungs- und Wartungseinrichtung durch eine einzige Person dort aufgebaut werden, wo sie benötigt wird, und im Falle des Nichtbedarfs entfernt werden.

Desweiteren kann die erfindungsgemäße Aufbewahrungs- und Wartungseinrichtung über Haltevorrichtungen verfügen, mittels welcher Aufbauaggregate gehalten werden können, die vom Fahrgestell der Maschine abnehmbar sind. In diesem Falle ist es insbesondere möglich, daß die Bodenreinigungsmaschine mit aufgesetzten Aufbauaggregaten in die Aufbewahrungs- und Wartungseinrichtung eingefahren wird; dabei greifen die Haltevorrichtungen in entsprechende Gegenstücke an den Aufbauaggregaten ein. Nun kann das Fahrgestell der Bodenreinigungsmaschine unter den Aufbauaggregaten herausgezogen werden und gegebenenfalls mit einem anderen Aufbauaggregat für einen weiteren Anwendungszweck ausgerüstet werden, während das erste Aufbauaggregat für einen weiteren Einsatz vorbereitet wird (Laden der Energiespeicher, Füllen der maschineneigenen Behälter mit Verbrauchsstoffen etc.). Bei einem derartigen System genügt ein einziges Fahrgestell, auf welches verschiedene Aufbauaggregate aufbaubar sind, um für verschiedene Einsätze passende Reinigungsmaschinen bereitzustellen.

Die verschiedenen Anschlüsse von der Aufbewahrungs- und Wartungseinrichtung zur Industriemaschine verfügen zweckmäßigerweise über Schnellandocksysteme, wodurch ein umständliches Hantieren mit entsprechenden Leitungen, Anschlüssen und dergleichen vermieden werden kann. Hierdurch kann die erfindungsgemäße Einrichtung noch kompakter ausgestaltet werden, nachdem es einer Zugänglichkeit der in dem Raum abgestellten Maschine zur Herstellung der erforderlichen Anschlüsse nicht bedarf. Eine weitere Maßnahme, die erfindungsgemäße Einrichtung möglichst kompakt zu gestalten, liegt in der verschwenkbaren Anordnung der Arbeitsfläche an der Einrichtung, beispielsweise indem die Arbeitsfläche abklappbar an einer Außenwand der Aufbewahrungs- und Wartungseinrichtung angelenkt ist.

Zweckmäßigerweise umfaßt die erfindungsgemäße Einrichtung eine Diebstahlsicherung für die in ihr abgestellte Maschine. Je nach dem Maschinentyp kann eine derartige Diebstahlsicherung darin bestehen, daß die Maschine mittels eines Sicherungselements an der Einrichtung angeschlossen wird. Bei einer anderen bevorzugten zweckmäßigen Ausgestaltung der erfindungsgemäßen Einrichtung ist demgegenüber vorgesehen, den Aufbewahrungsraum für die Maschine abschließbar zu gestalten, beispielsweise unter Verwendung eines Rolltores. Um das Rolltor zu öffnen kann dabei insbesondere ein Magnetkartenleser vorgesehen sein; oder aber es ist am Bedienpult der zentralen elektronischen Steuereinheit ein Code einzugeben, der die Berechtigung nachweist. In diesem Falle ist die Maschine nicht nur gegen unbefugtes Entfernen aus der erfindungsgemäßen Einrichtung geschützt; auch wird ein Manipulieren an der Maschine sowie ggfs. ein Entwenden von Werkeug, Ersatzteilen und dergleichen wirksam verhindert. Darüberhinaus ist, wenn der Aufbewahrungsraum für die Maschine mittels eines Tores verschlossen werden kann, die Maschine auch gegen Verschmutzung gesichert; dies ist insbesondere im Falle einer schmutzigen Umgebung von Vorteil, wie beispielsweise auf Baustellen. Eine derartige im Freien aufgestellte Aufbewahrungs- und Wartungseinrichtung kann darüberhinaus die in ihr aufbewahrte Industriemaschine vor Witterungseinflüssen schützen.

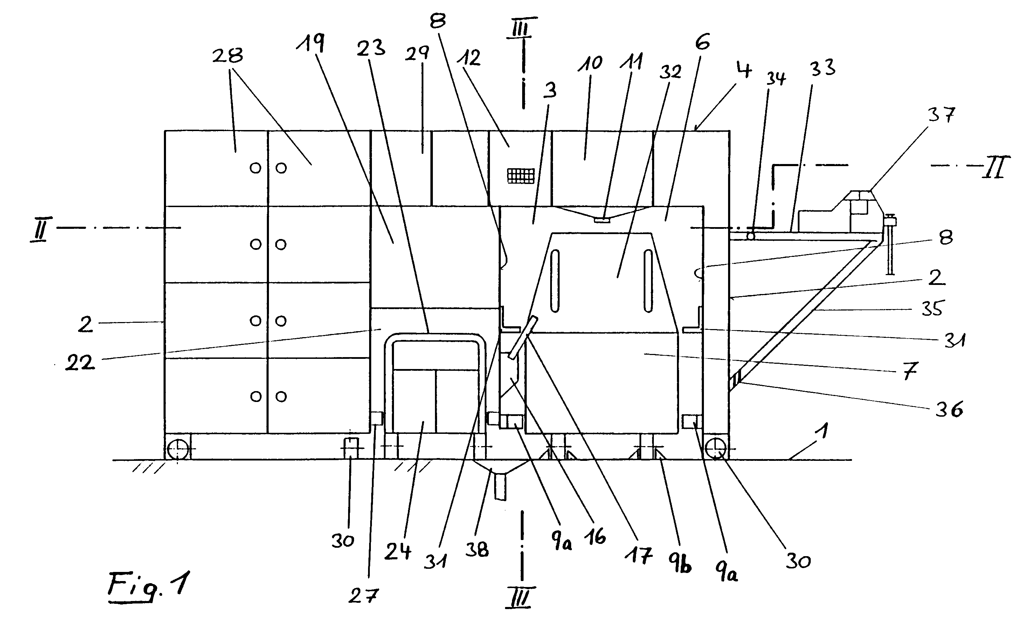

Im folgenden wird die Erfindung anhand der Zeichnung näher erläutert. In dieser zeigt
- Fig. 1: eine Ansicht von hinten auf ein speziell auf eine Scheuersaugmaschine abgestimmtes Ausführungsbeispiel der erfindungsgemäßen Aufbewahrungs- und Wartungseinrichtung;

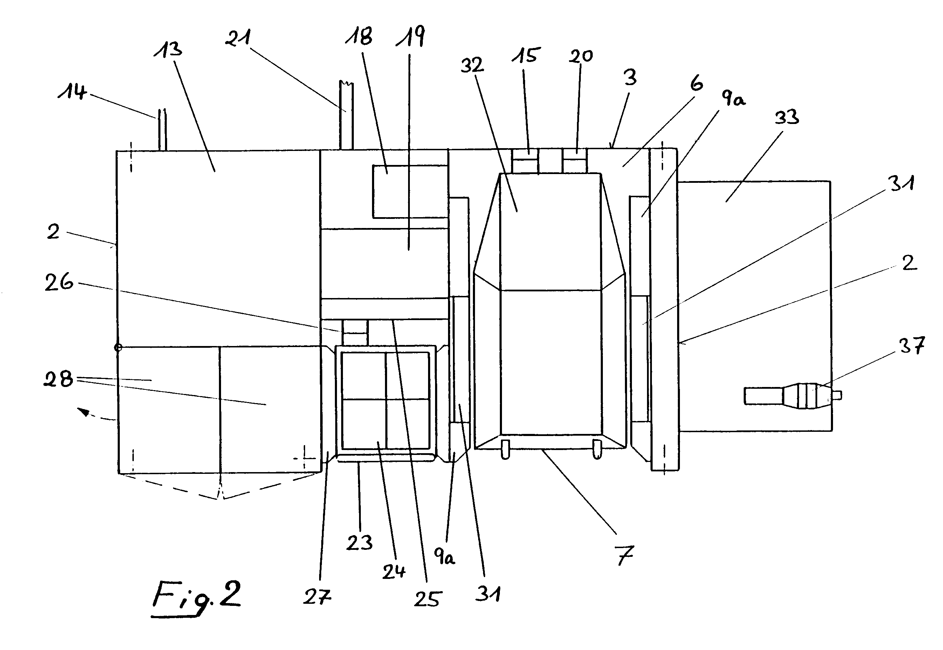

- Fig. 2: eine Schnittansicht gemäß Linie II-II in Fig. 1 und

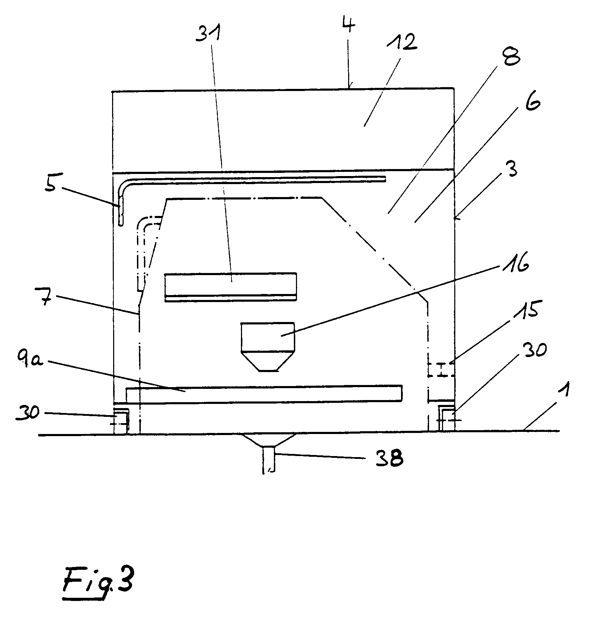

- Fig. 3: eine Schnittansicht gemäß Linie III-III in Fig. 1.

Die auf gewöhnlichem Untergrund 1 aufgebaute Aufbewahrungs- und Wartungseinrichtung besitzt zwei äußere Seitenwände 2, eine Stirnwand 3 sowie ein Dach 4.

In der Aufbewahrungs- und Wartungseinrichtung ist ein Raum 6 vorgesehen, dessen Dimensionen die vollständige Aufnahme der Scheuersaugmaschine 7 ermöglichen. Der Raum 6 wird durch zwei innere Seitenwände 8 sowie die Stirnwand 3 begrenzt. Die verbleibende Öffnung kann mittels eines Rolltores 5 verschlossen werden. An jeder der beiden inneren Seitenwände 8 ist ein Führungsbalken 9a vorgesehen. Diese dienen - ebenso wie die am Boden angeordneten Führungsleisten 9b - der Justierung der in den Raum 6 eingestellten Scheuersaugmaschine 7 in der Weise, daß diese sich stets an derselben Stelle befindet, in der - wie nachstehend erläutert wird - die Ver- und Entsorgung gewährleistet ist. Die Führungsbalken sind einstellbar, so daß sie an unterschiedlich breite Maschinen angepaßt werden können.

Über dem Raum 6 für die Scheuersaugmaschine 7 ist unterhalb der Decke 4 ein Tank 10 samt Dosiereinrichtung für Reinigungsmittel aufgehängt. Das von der Dosiereinrichtung zugemessene Reinigungsmittel wird über den Stutzen 11 in den für das Reinigungsmittel vorgesehenen Behälter der Scheuersaugmaschine 7 eingefüllt. Gesteuert wird die Dosiereinrichtung von einer elektronischen Steuereinheit 12, die ebenfalls unter der Decke 4 angeordnet ist.

Zum Laden der Akkumulatoren der Scheuersaugmaschine 7 ist ein Ladegerät 13 vorgesehen. Dieses wird über ein Netzkabel 14 mit Wechselstrom versorgt. Der vom Ladegerät bereitgestellte Ladestrom wird der Scheuersaugmaschine 7 über die an der Stirnwand 3 vorgesehene Schnellwechselkupplung 15 zugeführt. Auch der Ladevorgang wird über die elektronische Steuereinheit 12 geregelt.

Zur Entsorgung des nach dem Reinigungseinsatz der Scheuersaugmaschine in dieser angesammelten Schmutzwassers ist an einer der inneren Seitenwände 8 ein Trichter 16 vorgesehen, der unterhalb des Ablaßstutzens 17 des Schmutzwassertanks angeordnet ist. Das von dem Trichter aufgefangene Schmutzwasser wird mittels einer elektromotorisch getriebenen Pumpe dem austauschbaren Schmutzwasserfilter 18 zugeführt. Hier wird das Schmutzwasser aufbereitet und kann erneut für Reinigungszwecke verwendet werden. Hierzu ist eine Wasser-Rezirkulation 19 vorgesehen. Zur Einspeisung des aufbereiteten Wassers in die hierfür vorgesehenen Behälter der Scheuersaugmaschine 7 ist an der Stirnwand 3 eine Schnellwechselkupplung 20 angeordnet, die - ebenso wie die Schnellwechselkupplung 15 für den Ladestrom - beim Einfahren der Maschine 7 in den Raum 6 selbsttätig eine Verbindung zu dem entsprechenden Anschluß der Maschine herstellt. Über die Schnellwechselkupplung 20 kann der Maschine auch Frischwasser zugeführt werden, das der Aufbewahrungs- und Wartungseinrichtung über die Frischwasserleitung 21 bereitgestellt wird.

Neben dem Raum 6 für die Scheuersaugmaschine 7 ist ein weiterer Raum 22 vorgesehen. Dieser Raum 22 dient der Aufnahme des Batteriewagens 23 mit Wechselbatterien 24. Auch die Wechselbatterien 24 können über das Ladegerät 13 geladen werden. Hierzu ist in dem Raum 22 an dessen Stirnwand 25 eine Schnellwechselkupplung 26 vorgesehen, die der Schnellwechselkupplung 15 für die Scheuersaugmaschine 7 entspricht. Auch die Position des Batteriewagens 23 wird durch zwei Führungsleisten 27 definiert, so daß beim Einfahren des Batteriewagens in den Raum 22 an der Schnellwechselkupplung 26 automatisch eine Verbindung für den Ladestrom für die Wechselbatterien 24 hergestellt werden kann.

Neben dem Raum 22 für den Batteriewagen sind acht Fächer 28 für Werkzeug sowie für Ersatz-, Austausch- und Verschleißteile vorgesehen. Sämtliche Fächer 28 sind mittels verschließbarer Klappen verschlossen. Die Fächer für die Ersatz-, Austausch- und Verschleißteile sind dabei nur von hierzu berechtigten Personen zu öffnen. Zu diesem Zweck ist mit der elektronischen Steuereinheit 12 ein Magnetkartenleser verbunden, und der Zugang zu den Fächern 28 für Ersatz, Austausch- und Verschleißteile wird durch die elektronische Steuereinheit 12 freigegeben, wenn eine zum Zugang berechtigende Magnetkarte in den Magnetkartenleser eingeführt worden ist.

Eine Diagnoseeinheit 29 dient der Überprüfung des Zustandes der elektrischen Anlage sowie des Wassers; desweiteren findet durch sie eine Funktionsprüfung der Aufbewahrungs- und Wartungseinrichtung sowie der Scheuersaugmaschine statt.

Die gesamte Aufbewahrungs- und Wartungseinrichtung stützt sich über Rollen 30 auf dem Boden 1 ab. Hierdurch wird ermöglicht, daß sie durch eine einzige Person bewegt werden kann, sofern dies gewünscht ist.

An den inneren Seitenwänden 8 des Raumes 6 sind Halteklauen 31 vorgesehen. Diese sind Teil einer Hubeinrichtung für den Tankaufsatz 32 der Scheuersaugmaschine 7. Mittels der Halteklauen kann der Tankaufsatz angehoben werden, so daß das Fahrgestell für einen anderen Einsatz zur Verfügung steht.

An einer der äußeren Seitenwände 2 ist eine als Arbeitsfläche 33 dienende Werkbank vorgesehen. Diese ist über Gelenke 34 mit horizontaler Schwenkachse herunterklappbar an der Seitenwand 2 angeschlagen. Die Streben 35 sind, um das Herunterklappen der Werkbank zu ermöglichen, an der Seitenwand 2 über Gelenke 36 mit vertikaler Schwenkachse angelenkt. Auf der Arbeitsfläche 31 ist ein Schraubstock 37 angebracht.

Unterhalb der Aufbewahrungs- und Wartungseinrichtung ist ein Bodenabfluß 38 vorgesehen. In ihn kann Schmutzwasser aus der Scheuersaugmaschine, welches nicht aufbereitet werden soll, aus dem Schmutzwasserablauf 17 abgelassen werden.

## Patentansprüche

1. Aufbewahrungs- und Wartungseinrichtung für eine mobile Reinigungsmaschine oder dergleichen, umfassend einen zumindest teilweise abgeschlossenen Raum (6) für die abzustellende mobile Maschine (7), Führungselemente (9a, 9b) zu deren exakter Positionierung in dem Raum, eine erste Versorgungseinheit (13) zum Füllen der maschineneigenen Energiespeicher und eine zweite Versorgungseinheit (10, 11) zum Füllen maschineneigener Behälter mit Verbrauchsstoffen.

2. Aufbewahrungs- und Wartungseinrichtung nach Anspruch 1,
dadurch gekennzeichnet,
daß verschließbare Behältnisse (28) für Ersatz-, Austausch- und Verschleißteile vorgesehen sind.

3. Aufbewahrungs- und Wartungseinrichtung nach Anspruch 2,
dadurch gekennzeichnet,
daß die Behältnisse (28) mit Schlössern versehen sind, welche durch Münzeinwurf, mittels individueller Benutzerkarte oder mittels eines einzugeben Codes zu öffnen sind.

4. Aufbewahrungs- und Wartungseinrichtung nach Anspruch 1,
dadurch gekennzeichnet,
daß die zweite Versorgungseinheit mindestens einen Tank (10) mit einer Dosiervorrichtung für Reinigungsmittel umfaßt.

5. Aufbewahrungs- und Wartungseinrichtung nach Anspruch 1,
dadurch gekennzeichnet,
daß eine an einer äußeren Seitenwand (2) abklappbar angeschlagene Arbeitsfläche (33) vorgesehen ist.

6. Aufbewahrungs- und Wartungseinrichtung nach Anspruch 1,
dadurch gekennzeichnet,
daß der Raum (6) mittels eines Rolltores (5) verschließbar ist.

7. Aufbewahrungs- und Wartungseinrichtung nach Anspruch 1,
dadurch gekennzeichnet,
daß eine Entsorgungseinheit mit einer Aufbereitungsstufe (18, 19) für Schmutzwasser vorgesehen ist.

8. Aufbewahrungs- und Wartungseinrichtung nach Anspruch 7,
dadurch gekennzeichnet,
daß die Aufbewahrungsstufe eine Schlammpresse umfaßt.

9. Aufbewahrungs- und Wartungseinrichtung nach Anspruch 1,
dadurch gekennzeichnet,
daß Haltevorrichtungen (31) vorgesehen sind für vom Fahrgestell der jeweiligen Maschine (7) abnehmbare Aufbauaggregate.

10. Aufbewahrungs- und Wartungseinrichtung nach Anspruch 1,
dadurch gekennzeichnet,
daß an der ersten und/oder der zweiten Versorgungseinheit Schnellwechselvorrichtungen (15, 20) zu deren Anschluß an die mobile Maschine (7) vorgesehen sind.

11. Aufbewahrungs- und Wartungseinrichtung nach Anspruch 1,
dadurch gekennzeichnet,
daß die Führungselemente (9a, 9b) auf unterschiedliche Maschinen einstellbar sind.

12. Aufbewahrungs- und Wartungseinrichtung nach Anspruch 1,
dadurch gekennzeichnet,
daß eine Reinigungsvorrichtung zum Reinigen der maschineneigenen Behälter vorgesehen ist.

13. Aufbewahrungs- und Wartungseinrichtung nach Anspruch 1,
dadurch gekennzeichnet,
daß ein Warmwasserbereiter vorgesehen ist.

14. Aufbewahrungs- und Wartungseinrichtung nach Anspruch 1,
dadurch gekennzeichnet,
daß Räder (30) vorgesehen sind zu ihrer Abstützung auf dem Boden (1).

## Claims

1. Storage and maintenance system for a mobile cleaning machine or the like, comprising an at least partially closed space (6) for the mobile machine (7) to be parked, guide members (9a, 9b) for its exact positioning in the space, a first supply unit (13) for filling the machines built-in energy store and a second supply unit (10, 11) for filling the machines built-in container with consumables.

2. Storage and maintenance system according to Claim 1, characterised in that lockable compartments (28) are provided for replacement parts, exchange parts and parts subject to wear.

3. Storage and maintenance system according to Claim 2, characterised in that the compartments (28) are provided with locks, which can be opened by inserting a coin, by means of an individual user card or by means of a code to be keyed in.

4. Storage and maintenance system according to Claim 1, characterised in that the second supply unit comprises at least one tank (10) with a metering device for cleaning agent.

5. Storage and maintenance system according to Claim 1, characterised in that a working surface (33) is provided, which is attached to an outer side wall (2) so that it can be folded down.

6. Storage and maintenance system according to Claim 1, characterised in that the space (6) can be closed off by means of a sliding door (5).

7. Storage and maintenance system according to Claim 1, characterised in that a disposal unit is provided with a treatment stage (18, 19) for dirty water.

8. Storage and maintenance system according to Claim 7, characterised in that the storage stage comprises a slurry press.

9. Storage and maintenance system according to Claim 1, characterised in that holding devices (31) are provided for attachable units able to be removed from the chassis of the respective machine (7).

10. Storage and maintenance system according to Claim 1, characterised in that provided on the first and/or the second supply unit are quick-change devices (15, 20) for their connection to the mobile machine (7).

11. Storage and maintenance system according to Claim 1, characterised in that the guide members (9a, 9b) can be adjusted to different machines.

12. Storage and maintenance system according to Claim 1, characterised in that a cleaning device for cleaning the machine's built-in container is provided.

13. Storage and maintenance system according to Claim 1, characterised in that means for producing hot water are provided.

14. Storage and maintenance system according to Claim 1, characterised in that wheels (30) are provided for its support on the floor (1).

## Revendications

1. Dispositif d'entreposage et d'entretien pour une machine de nettoyage ou une machine mobile analogue, comprenant un local (6) pouvant être au moins partiellement fermé, pour recevoir la machine mobile (7) à garer, des éléments de guidage (9a, 9b) pour le positionnement exact de la machine dans le local, une première unité d'alimentation (13) pour charger l'accumulateur d'énergie de la machine et une deuxième unité d'alimentation (10, 11) pour remplir de produits consommables des réservoirs de la machine.

2. Dispositif d'entreposage et d'entretien suivant la revendication 1, **caractérisé** par le fait qu'il comprend des réceptacles (28) pouvant être fermés pour recevoir des pièces de remplacement, de rechange et d'usure.

3. Dispositif d'entreposage et d'entretien suivant la revendication 2, **caractérisé** par le fait que les réceptacles (28) sont munis de serrures qui peuvent être ouvertes par introduction de pièces de monnaie ou jetons, à l'aide d'une carte individuelle d'utilisateur ou par introduction d'un code.

4. Dispositif d'entreposage et d'entretien suivant la revendication 1, **caractérisé** par le fait que la deuxième unité d'alimentation comprend au moins une citerne (13) avec un dispositif de dosage pour du produit de nettoyage.

5. Dispositif d'entreposage et d'entretien suivant la revendication 1, **caractérisé** par le fait qu'elle comprend un plan de travail (33) monté de façon rabattable sur une paroi latérale extérieure (2).

6. Dispositif d'entreposage et d'entretien suivant la revendication 1, **caractérisé** par le fait que le local (6) peut être fermé à l'aide d'une porte roulante (5).

7. Dispositif d'entreposage et d'entretien suivant la revendication 1, **caractérisé** par le fait qu'il comprend une unité d'élimination avec un étage de traitement (18, 19) pour de l'eau sale.

8. Dispositif d'entreposage et d'entretien suivant la revendication 7, **caractérisé** par le fait que l'étage de traitement comprend une presse à boue.

9. Dispositif d'entreposage et d'entretien suivant la revendication 1, **caractérisé** par le fait qu'il comprend des dispositifs de support (31) pour des accessoires ou outils montés de façon amovible sur le châssis de la machine (7).

10. Dispositif d'entreposage et d'entretien suivant la revendication 1, **caractérisé** par le fait qu'il comprend, sur la première et/ou la deuxième unité(s) d'alimentation, des coupleurs rapides (15, 20) en vue du raccordement à la machine mobile (7).

11. Dispositif d'entreposage et d'entretien suivant la revendication 1, **caractérisé** par le fait les éléments de guidage (9a, 9b) sont réglables sur des machines différentes.

12. Dispositif d'entreposage et d'entretien suivant la revendication 1, **caractérisé** par le fait qu'il comprend un dispositif de nettoyage pour le nettoyage des réservoirs de la machine.

13. Dispositif d'entreposage et d'entretien suivant la revendication 1, **caractérisé** par le fait qu'il comprend un préparateur d'eau chaude.

14. Dispositif d'entreposage et d'entretien suivant la revendication 1, **caractérisé** par le fait qu'il comprend des roues (30) pour son appui sur le sol (1).
